(19) Europäisches Patentamt
European Patent Office
Office européen des brevets

(11) **EP 2 462 333 B1**

(12) **EUROPÄISCHE PATENTSCHRIFT**

(45) Veröffentlichungstag und Bekanntmachung des Hinweises auf die Patenterteilung:
**06.03.2013 Patentblatt 2013/10**

(21) Anmeldenummer: **10732658.9**

(22) Anmeldetag: **03.07.2010**

(51) Int Cl.:
*F02M 25/07* (2006.01)    *F02D 41/00* (2006.01)
*F02B 37/013* (2006.01)

(86) Internationale Anmeldenummer:
**PCT/EP2010/004044**

(87) Internationale Veröffentlichungsnummer:
**WO 2011/018135 (17.02.2011 Gazette 2011/07)**

(54) **VERBRENNUNGSKRAFTMASCHINE**

INTERNAL COMBUSTION ENGINE

MOTEUR À COMBUSTION INTERNE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **08.08.2009 DE 102009036743**

(43) Veröffentlichungstag der Anmeldung:
**13.06.2012 Patentblatt 2012/24**

(73) Patentinhaber: **Daimler AG**
**70327 Stuttgart (DE)**

(72) Erfinder:
• **BEIL, Heiko**
**70182 Stuttgart (DE)**
• **WEGENAST, Florian**
**73760 Ostfildern (DE)**

(74) Vertreter: **JENSEN & SON**
**366-368 Old Street**
**London**
**EC1V 9LT (GB)**

(56) Entgegenhaltungen:
**WO-A1-2004/044412    WO-A1-2008/007808**
**WO-A2-2007/107865    JP-A- 2004 150 319**
**US-A1- 2006 236 693    US-A1- 2007 214 771**
**US-A1- 2008 141 671**

EP 2 462 333 B1

**Beschreibung**

Die Erfindung betrifft ein Verfahren zum Betreiben einer Verbrennungskraftmaschine nach dem Oberbegriff von Patentanspruch 1, sowie eine Verbrennungskraftmaschine nach dem Oberbegriff von Patentanspruch 8.

Die WO 2007/107865 A2 zeigt eine Verbrennungskraftmaschine mit zumindest einem Abgasturbolader, welcher auf einer Abgasseite der Verbrennungskraftmaschine eine von einem Abgas der Verbrennungskraftmaschine durchströmbare Turbine aufweist, bei welchem in Abhängigkeit eines Betriebszustandes der Verbrennungskraftmaschine mittels einer Hochdruck-Abgasrückführung und mittels einer Niederdruck-Abgasrückführung Abgas entnommen und zu einer Ansaugseite der Verbrennungskraftmaschine rückgeführt wird. In einem Drehzahlbereich der Verbrennungskraftmaschine ist eine Umschaltgrenze vorgesehen, bei welcher von einer Rückführung des Abgases mittels der Niederdruck-Abgasrückführung auf eine Rückführung des Abgases mittels der Hochdruck-Abgasrückführung und mittels der Niederdruck-Abgasrückführung umgeschaltet wird. Unterhalb einer Drehzahlgrenze von 2000 rpm ist eine Hochdruck-AGR vorgesehen, oberhalb der Drehzahlgrenze ein kombinierter Betrieb mit Nieddruck-AGR und Hochdruck-AGR vorgesehen.

Die JP 2004 150319 A zeigt eine Hochdruck- und Niederdruck-AGR und einen einzigen Abgasturbolader. Unterhalb einer Umschaltgrenze ist bei niedriger/mittlerer Last und niedrigen/mittleren Drehzahlen ein kombinierter Hochdruck- und Niederdruck-Abgasrückführbetrieb vorgesehen. Unterhalb der Umschaltgrenze ist bei niedrigen/mittleren Drehzahlen und hoher Last hingegen nur ein Niederdruck-Abgasrückführbetrieb vorgesehen. Oberhalb der Umschaltgrenze ist ein Hochdruck-Abgasrückführbetrieb bei hohen Drehzahlen und hoher Last vorgesehen.

Ferner ist eine Verbrennungskraftmaschine aus der DE 10 2005 046 507 A1 bekannt, welche eine Brennkraftmaschine mit zwei hintereinander geschalteten Abgasturboladern offenbart, wobei eine Rückführung von Abgas der Brennkraftmaschine aus einem Abgastrakt derselbigen von stromauf einer Turbine eines motornahen Abgasturboladers in einen Ansaugtrakt der Brennkraftmaschine vorgesehen ist.

Diese bekannte Brennkraftmaschine weist bereits gute Kraftstoffverbrauchs- sowie Emissionswerte auf, zur Realisierung zukünftiger, vorgegebener Emissionsgrenzwerte ist jedoch ein erhöhter Aufwand vonnöten.

Aus der US 7013879 B2 ist ein Abgasrückführungssystem bekannt, bei welchem eine Hochdruck-Abgasrückführung stromauf einer Turbine eines Abgasturboladers sowie eine Niederdruck-Abgasrückführung stromab der Turbine des Abgasturboladers vorgesehen sind.

Die WO 2008/058596 A1 beschreibt eine Brennkraftmaschine mit Abgasrückführung, bei welcher ebenso eine Hochdruck-Abgasrückführung stromauf einer Turbine eines Abgasturboladers sowie eine Niederdruck-Abgasrückführung stromab dieser Turbine vorgesehen sind. Diese bekannten Lösungen weisen jedoch Nachteile bezüglich einer Erreichung insbesondere zukünftiger Emissions-Grenzwerte auf.

Es ist daher Aufgabe der vorliegenden Erfindung, ein Verfahren zum Betreiben einer Verbrennungskraftmaschine der eingangs genannten Art derart weiter zu entwickeln, dass niedrige Emissionen mit einem geringen Aufwand realisierbar sind.

Diese Aufgabe wird durch ein Verfahren zum Betreiben einer Verbrennungskraftmaschine mit den Merkmalen des Patentanspruchs 1 sowie durch eine Verbrennungskraftmaschine mit den Merkmalen des Patentanspruchs 8 gelöst. Vorteilhafte Ausgestaltungen mit zweckmäßigen und nicht-trivialen Weiterbildungen der Erfindung sind in den abhängigen Ansprüchen angegeben.

Ein erfindungsgemäßes Verfahren zum Betreiben einer Verbrennungskraftmaschine mit zumindest einem Abgasturbolader, welcher auf einer Abgasseite der Verbrennungskraftmaschine eine von einem Abgas der Verbrennungskraftmaschine durchströmbare Turbine aufweist, bei welchem in Abhängigkeit eines Betriebszustandes der Verbrennungskraftmaschine mittels einer Hochdruck-Abgasrückführung und mittels einer Niederdruck-Abgasrückführung Abgas entnommen und zu einer Ansaugseite der Verbrennungskraftmaschine rückgeführt wird, wobei in einem Drehzahlbereich der Verbrennungskraftmaschine eine Umschaltgrenze vorgesehen ist, bei welcher von einer Rückführung des Abgases mittels der Niederdruck-Abgasrückführung auf eine Rückführung des Abgases mittels der Hochdruck-Abgasrückführung und mittels der Niederdruck-Abgasrückführung, umgeschaltet wird, zeichnet sich dadurch aus, dass der zumindest eine Abgasturbolader als Hochdruck-Abgasturbolader ausgebildet ist, und dass ein stromab zu diesem seriell geschalteter Niederdruck-Abgasturbolader *vorgesehen ist,* wobei die Umschaltgrenze in einem Drehzahlbereich

$$1000\left[\frac{1}{\min}\right] \leq \frac{U}{\min} \leq 2000\left[\frac{1}{\min}\right]$$ der Verbrennungskraftmaschine vorgesehen ist, bei welcher von einer Rückführung des Abgases mittels der Niederdruck-Abgasrückführung auf eine Rückführung des Abgases mittels der Hochdruck-Abgasrückführung und mittels der Niederdruck-Abgasrückführung umgeschaltet wird, wobei in einem Drehzahlbereich der Verbrennungskraftmaschine unterhalb der Umschaltgrenze das Abgas ausschließlich mittels der Niederdruck -Abgasrückführung entnommen und rückgeführt wird, wobei in einem Drehzahlbereich der Verbrennungskraftmaschine oberhalb der Umschaltgrenze das Abgas mittels der Hochdruck-Abgasrückführung und mittels der Niederdruck-Abgasrückführung kombiniert entnommen und rückgeführt wird, wobei in einem oberen Drehzahlbereich und/ oder Lastbereich der Verbrennungskraftmaschine das Abgas ausschließlich mittels der Hochdruck-Abgasrückführung entnommen und rückgeführt wird.

Diese Umschaltgrenze liegt in einem Drehzahlbereich von größer gleich 1000 Umdrehungen pro Minute bis kleiner gleich 2000 Umdrehungen pro Minute, insbesondere von größer gleich 1200 Umdrehungen pro Minute ist bis kleiner gleich 1600 Umdrehungen pro Minute, und insbesondere bei im Wesentlichen 1250 Umdrehungen pro Minute. Durch diese Abgasrückführung von der Abgasseite der Verbrennungskraftmaschine zu der Ansaugseite durch zwei Abgasrückführungspfade ist eine Erreichung von derzeitigen, aber insbesondere auch von zukünftigen, durch den Gesetzgeber vorgegebenen, Emissionsgrenzwerten möglich. Insbesondere ist dadurch eine Einhaltung von EU6-Emissionsgrenzwerten ohne aktive Stickoxid-Abgasnachbehandlung ($NO_x$-Abgasnachbehandlung) möglich, ohne Nachteile bei einem Kraftstoffverbrauch der Verbrennungskraftmaschine in Kauf nehmen zu müssen.

Die Erfindung betrifft zudem Verbrennungskraftmaschine mit zumindest einem Abgasturbolader, welcher auf einer Abgasseite der Verbrennungskraftmaschine eine von einem Abgas der Verbrennungskraftmaschine durchströmbare Turbine aufweist, wobei eine Hochdruck-Abgasrückführung und eine Niederdruck-Abgasrückführung vorgesehen sind, mittels welchen Abgas von der Abgasseite zu einer Ansaugseite der Verbrennungskraftmaschine rückführbar ist, wobei der Verbrennungskraftmaschine eine Steuereinrichtung zugeordnet ist, mittels welcher in einem Drehzahlbereich der Verbrennungskraftmaschine von einer Rückführung des Abgases mittels der Niederdruck-Abgasrückführung auf eine Rückführung des Abgases mittels der Hochdruck-Abgasrückführung und mittels der Niederdruck-Abgasrückführung umschaltbar ist, wobei erfindungsgemäß vorgesehen ist, dass der zumindest eine Abgasturbolader als Hochdruck-Abgasturbolader ausgebildet ist, und dass ein stromab zu diesem seriell geschalteter Niederdruck-Abgasturbolader vorgesehen ist, welche jeweils auf einer Abgasseite der Verbrennungskraftmaschine eine von einem Abgas der Verbrennungskraftmaschine durchströmbare Turbine aufweisen, wobei stromab zumindest einer der beiden Turbinen der beiden Abgasturbolader die Niederdruck-Abgasrückführung angeordnet ist, wobei die Hochdruck-Abgasrückführung zwischen der Verbrennungskraftmaschine und der Turbine des Hochdruck-Abgasturboladers angeordnet ist, wobei die Niederdruck-Abgasrückführung stromab der Turbine des Niederdruck-Abgasturboladers angeordnet ist, wobei mittels der Steuereinrichtung in einem Drehzahlbereich $1000\left[\dfrac{1}{\min}\right] \leq \dfrac{U}{\min} \leq 2000\left[\dfrac{1}{\min}\right]$ der Verbrennungskraftmaschine von einer Rückführung des Abgases mittels der Niederdruck-Abgasrückführung auf eine Rückführung des Abgases mittels der Hochdruck-Abgasrückführung und mittels der Niederdruck-Abgasrückführung umschaltbar ist, wobei unterhalb des Drehzahlbereichs das Abgas ausschließlich mittels der Niederdruck-Abgasrückführung entnommen und rückgeführt ist. Vorteilhafte Ausgestaltungen des Verfahrens sind dabei als vorteilhafte Ausgestaltungen der Verbrennungskraftmaschine und umgekehrt anzusehen.

Die besagte Steuereinrichtung kann beispielsweise als separates Steuergerät ausgebildet sein. Ebenso ist es möglich, dass die Steuereinrichtung in eine ohnehin vorhandene Motorsteuerung, welche auf einem Motorsteuergerät ausgeführt wird, integriert und somit von der Verbrennungskraftmaschine umfasst ist.

Durch die erfindungsgemäße Verbrennungskraftmaschine sowie durch das erfindungsgemäße Verfahren ist die Einhaltung der besagten Grenzwerte mit nur geringem Aufwand dargestellt, was Kosten für die Verbrennungskraftmaschine sowie für das Verfahren und damit Kosten für einen Kraftwagen in einem geringen Rahmen hält.

Die erfindungsgemäße Verbrennungskraftmaschine ist dabei insbesondere als Dieselmotor ausgebildet, bei welchem eine Vermeidung von Stickoxiden bekanntermaßen eine sehr wichtige Rolle darstellt. Nichtsdestotrotz kann die Verbrennungskraftmaschine auch als anderweitiger Verbrennungsmotor, beispielsweise als Ottomotor, ausgebildet sein.

Durch die erfindungsgemäße Ausführungsform der Verbrennungskraftmaschine und des Verfahrens ist eine Erhöhung eines Aufladegrads durch Erhöhung eines Abgasmassenstroms über die Turbine des entsprechenden Abgasturboladers bei gleichzeitiger Erhöhung einer Abgasrückführung erreicht. Bei der Aufteilung eines Massenstroms der Abgasrückführung ist ein bestmöglicher Kompromiss zwischen dem Kraftstoffverbrauch und Stickoxid-Emissionen der Verbrennungskraftmaschine anzustreben.

Ist der zumindest eine Abgasturbolader der Verbrennungskraftmaschine als Hochdruck-Abgasturbolader ausgebildet, und ist ein stromab zu diesem ein seriell geschalteter Niederdruck-Abgasturbolader vorgesehen, wobei die Abgasturbolader jeweils auf einer Abgasseite der Verbrennungskraftmaschine eine von einem Abgas der Verbrennungskraftmaschine durchströmbare Turbine aufweisen, so ist es möglich, dass die erste Abgasrückführung zwischen der Verbrennungskraftmaschine und der Turbine des Hochdruck-Abgasturboladers angeordnet sein kann. Dementsprechend kann die zumindest eine weitere Abgasrückführeinrichtung stromab der Turbine des Niederdruck-Abgasturboladers und stromab einer Abgasnachbehandlungsanlage, insbesondere eines Partikelfilters, angeordnet sein, der wiederum stromab der Turbine des Niederdruck-Abgasturboladers angeordnet ist. Durch die so gestaltete Niederdruck-Abgasrückführung sind höhere Ladedrücke für die Verbrennungskraftmaschine möglich aufgrund einer höheren Antriebsleistung der Turbinen durch höhere Massenströme des Abgases. Aufgrund dieser höheren Ladedrücke ist wiederum ein höheres Luft-Kraftstoffverhältnis bei gleicher Sauerstoffmassenkonzentration beziehungsweise Abgas-Rückführrate darstellbar, woraus ein besserer Hochdruckprozess bei einer Verbrennung der Verbrennungskraftmaschine resultiert.

Etwaige Nachteile bei einem Ladungswechsel der Verbrennungskraftmaschine durch einen höheren Abgasgegendruck werden durch diesen besseren Hochdruckprozess überkompensiert. Im Rahmen der erfindungsgemäßen Verbrennungskraftmaschine ist es somit möglich, bei konstanter Sauerstoffmassenkonzentration einen verbesserten Kraftstoffverbrauch der Verbrennungskraftmaschine darzustellen oder bei konstantem Luft-Kraftstoffverhältnis eine niedrigere Sauerstoffmassenkonzentration und damit niedrigere Stickoxid-Emissionen zu ermöglichen bei im Wesentlichen konstantem Kraftstoffverbrauch.

Darüber hinaus ist ein bestmöglicher Kompromiss zwischen Ruß- und Stickoxidemissionen geschaffen mit einer Entspannung des Abgases der Verbrennungskraftmaschine vor der Turbine des Hochdruck-Abgasturboladers durch niedrigere Massenströme, womit eine Verminderung einer Ladungswechselarbeit der Verbrennungskraftmaschine einhergeht. Wie bereits angedeutet, ist durch einen kombinierten Abgasrückführ-Betrieb aus den beiden Abgasrückeinrichtungen ein bestmöglicher Kompromiss zwischen Emissionen und Kraftstoffverbrauch möglich.

Weitere Vorteile, Merkmale und Einzelheiten der Erfindung ergeben sich aus der nachfolgenden Beschreibung.eines bevorzugten Ausführungsbeispiels sowie anhand der Zeichnungen.

Die Zeichnungen zeigen in:

Fig. 1    eine schematische Darstellung einer Verbrennungskraftmaschine mit einem Hochdruck-Abgasturbolader und einem seriell zu diesem geschalteten Niederdruck-Abgasturbolader, wobei auf einer Abgasseite der Verbrennungskraftmaschine stromauf einer Turbine des Hochdruck-Abgasturboladers eine erste Abgasrückführeinrichtung und stromab einer Turbine des Niederdruck-Abgasturboladers eine zweite Abgasrückführeinrichtung vorgesehen ist,

Fig. 2    eine Darstellung einer Betriebsstrategie für die Verbrennungskraftmaschine gemäß Fig. 1, wobei ein effektiver Mitteldruck der Verbrennungskraftmaschine über einer Drehzahl derselbigen aufgetragen ist,

Fig. 3    eine Betriebsstrategie für eine Niederdruck-Abgasrückführung der Verbrennungskraftmaschine gemäß Fig. 1, wobei der effektive Mitteldruck der Verbrennungskraftmaschine über der Drehzahl derselbigen dargestellt ist,

Fig. 4    eine Betriebsstrategie einer Niederdruck-Abgasrückführ-Aufstauklappe der Verbrennungskraftmaschine gemäß Fig. 1 wobei der effektive Mitteldruck der Verbrennungskraftmaschine über der Drehzahl derselbigen dargestellt ist und

Fig. 5    eine Betriebsstrategie für ein Hochdruck-Abgasrückführ-Ventil der Verbrennungskraftmaschine gemäß Fig. 1, wobei der effektive Mitteldruck der Verbrennungskraftmaschine über der Drehzahl derselbigen dargestellt ist.

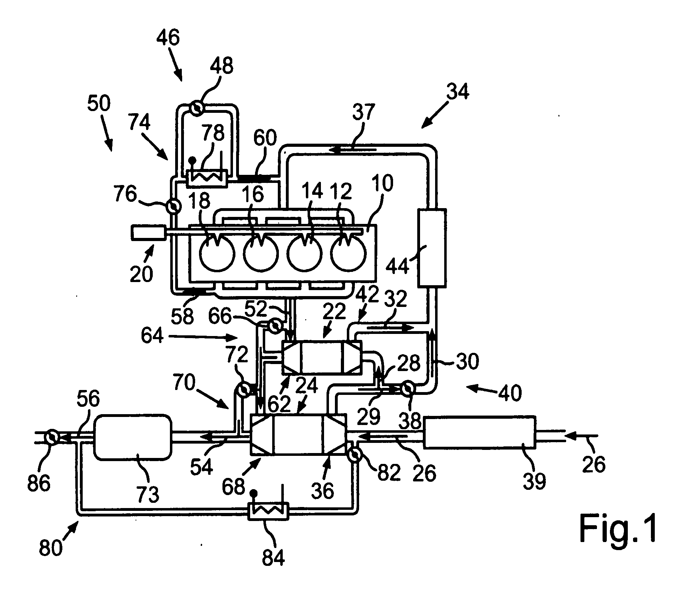

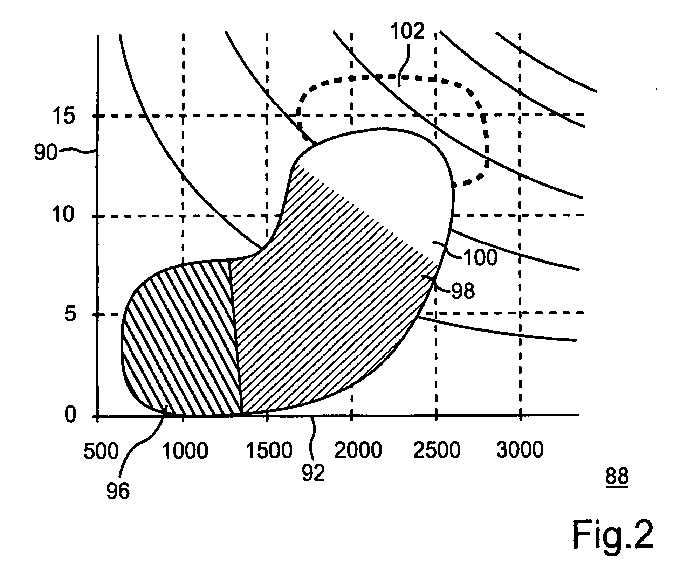

Während die Fig. 1 eine schematische Verbrennungskraftmaschine mit einer Zwei-Wege-Abgasrückführung zeigt, durch welche eine Einhaltung von EU6-Emissionsgrenzwerten auf einfache Art und Weise möglich ist, zeigen die Fig. 2 bis 5 Betriebsstrategien der Verbrennungskraftmaschine bzw. von Komponenten der Verbrennungskraftmaschine und der Zwei-Wege-Abgasrückführung zur Erreichung niedriger Emissionen sowie eines geringen Kraftstoffverbrauchs.

Die Fig. 1 zeigt eine Verbrennungskraftmaschine 10, welche als Dieselmotor ausgebildet ist und vier Zylinder 12, 14, 16 und 18 aufweist, in welche durch ein Hochdruckeinspritzsystem 20 Kraftstoff eingespritzt wird. Die Verbrennungskraftmaschine 10 umfasst einen Hochdruck-Abgasturbolader 22 sowie einen stromab zu diesem seriell geschalteten Niederdruck-Abgasturbolader 24. Eine gemäß Richtungspfeilen 26 von der Verbrennungskraftmaschine auf einer Ansaugseite 34 derselbigen angesaugte und von einem Luftfilter 39 gefilterte Luft wird von einem Verdichter 36 des Niederdruck-Abgasturboladers 24 vorverdichtet. In Abhängigkeit einer Stellung einer Umströmungsklappe 38 einer Umströmungseinrichtung 40 wird die vorverdichtete Luft von einem Verdichter 42 des Hochdruck-Abgasturboladers 22 weiter verdichtet. Richtungspfeile 28, 29, 30, 32 und 37 deuten dabei eine Durchströmung der Ansaugseite 34 der Luft an.

Stromab des Verdichters 42 des Hochdruck-Abgasturboladers 22 kann die verdichtete und somit erwärmte Luft durch einen Ladeluftkühler 44 strömen, wodurch die Luft gekühlt wird.

Auf einer Abgasseite 50 der Verbrennungskraftmaschine 10 strömt ein Abgas in Folge einer Verbrennung eines Kraftstoff-Luft-Gemisches gemäß Richtungspfeilen 52, 54, 56, 58 und 60 aus der Verbrennungskraftmaschine 10 durch die Abgasseite 50. Dabei treibt das Abgas eine Turbine 62 des Hochdruck-Abgasturboladers an, wobei die Turbine 62 über eine Welle mit dem Verdichter 42 in Verbindung steht, wodurch also auch der Verdichter 42 durch das Abgas angetrieben wird. Ein durch den Hochdruck-Abgasturbolader 22 darstellbarer Ladedruck ist durch eine Umströmungseinrichtung 64 einstellbar, welche eine Regelklappe 66 umfasst, mittels welcher ein Abgasmassenstrom einstellbar ist, der die Turbine 62 durch die Umströmungsvorrichtung 64 umströmt.

Zum Antrieb des Verdichters 36 des Niederdruck-Abgasturboladers 24 ist stromab der Turbine 62 eine Turbine 68 des Niederdruck-Abgasturboladers 24 auf der Abgasseite 50 angeordnet, welche ebenfalls über eine Welle mit dem Verdichter 36 verbunden ist.

Zur Umströmung der Turbine 68 ist ebenso eine Umströmungseinrichtung 70 vorgesehen, welche eine Regelklappe 72 umfasst, die auch als Waste-Gate zu bezeichnen ist und in ähnlicher Weise wie die Regelklappe 66 einen Abgasmassenstrom einstellen kann, welcher die Turbine 68 umströmen soll.

Gemäß dem Richtungspfeil 54 strömt das Abgas weiter durch eine Abgasnachbehandlungsanlage in Form eines Oxidationskatalysators, welcher das Abgas von Kohlenwasserstoffen (HC) und $CO_x$-Emissionen reinigt sowie eines Partikelfilters 73, durch welchen das Abgas insbesondere von Partikeln gereinigt wird, ehe es gemäß einem Richtungspfeil 56 die Abgasseite 50 der Verbrennungskraftmaschine 10 verlässt und an die Umwelt strömt.

Zur Reduzierung von Emissionen, insbesondere von Stickoxid-Emissionen ($NO_x$-Emissionen), weist die Verbrennungskraftmaschine 10 eine erste Abgasrückführeinrichtung in Form einer Hochdruck-Abgasrückführung 74 auf, welche gemäß einem Richtungspfeil 58 das Abgas der Verbrennungskraftmaschine unmittelbar stromab der Verbrennungskraftmaschine entnimmt und zu der Ansaugseite 34 unmittelbar stromauf der Verbrennungskraftmaschine 10 gemäß einem Richtungspfeil 60 zurückführt. Zur Einstellung eines Abgasmassenstroms des zurückgeführten Abgases ist ein Hochdruck-Abgasrückführ-Ventil (Hochdruck-AGR-Ventil) 76 vorgesehen. Des Weiteren umfasst die Hochdruck-Abgasrückführung 74 einen Abgasrückführ-Kühler (AGR-Kühler) 78, welcher das rückgeführte Abgas in seiner Temperatur absenkt. Das rückgeführte Abgas wirkt bei einer Verbrennung der Verbrennungskraftmaschine 10 als Inertgas und reduziert eine Bildung von Stickoxiden.

Die Hochdruck-Abgasrückführung 74 weist eine Umströmungseinrichtung 46 auf, die dem AGR-Kühler 78 zugeordnet ist. Mittels der Umströmungseinrichtung 46 ist der AGR-Kühler 78 umströmbar, wobei diese Umströmbarkeit beziehungsweise ein Massenstrom des umströmenden Abgases durch ein Umströmungsventil 48 der Umströmungseinrichtung 46 geregelt wird.

Zur Einhaltung strengerer Emissions-Grenzwerte, insbesondere Stickoxid-Grenzwerte, wie der EU6-Norm, weist die Verbrennungskraftmaschine 10 zudem eine zweite Abgasrückführeinrichtung in Form einer Niederdruck-Abgasrückführung 80 auf, mittels welcher Abgas der Verbrennungskraftmaschine 10 unmittelbar nach dem Partikelfilter 73 auf der Abgasseite 50 entnehmbar und auf die Ansaugseite 34 unmittelbar vor dem Verdichter 36 des Niederdruck-Abgasturboladers 24 rückgeführt wird. Zur Einstellung eines Abgasmassenstroms dieses rückgeführten Abgases ist ein weiteres AGR-Ventil in Form eines Niederdruck-AGR-Ventils 82 vorgesehen. Auch die Niederdruck-Abgasrückführung 80 umfasst einen AGR-Kühler 84 zur Kühlung des rückgeführten Abgases.

Des Weiteren umfasst die Niederdruck-Abgasrückführung 80 eine Abgasaufstauklappe 86, mittels welcher das Abgas der Verbrennungskraftmaschine unmittelbar stromab einer Entnahmestelle der Niederdruck-Abgasrückführung 80 aufstaubar ist, um somit eine weitere Regelungsmöglichkeit für den Abgasmassenstrom zu schaffen.

Durch ein betriebspunktabhängiges Zumischen des Abgasmassenstroms des durch die Niederdruck-Abgasrückführung 80 zurückgeführten Abgases lässt sich im Vergleich zu einer Hockdruck-Abgasrückführung eine Abgasturboladeraufladung signifikant steigern. Daher ist eine Abgasrückführung durch die Niederdruck-Abgasrückführung 80 eine Auflademaßnahme.

Die Fig. 2 zeigt eine Betriebsstrategie der Verbrennungskraftmaschine 10 gemäß Fig. 1 in einem Diagramm 88, bei welchem auf einer Ordinate 90 ein effektiver Mitteldruck der Verbrennungskraftmaschine 10 und auf einer Abszisse 92 eine Drehzahl der Verbrennungskraftmaschine 10 gemäß Fig. 1 aufgetragen ist. Der effektive Mitteldruck liegt dabei in der Maßeinheit Bar, die Drehzahl in der Maßeinheit 1 pro Minute vor. Die in dem Diagramm 88 jeweils angegebenen Werte sind dabei lediglich beispielhaft aufzufassen. Ein Bereich 96 kennzeichnet einen Betriebsbereich der Verbrennungskraftmaschine 10, in welchem eine Abgasrückführung durch die Niederdruck-Abgasrückführung 80 durchgeführt wird. In Bereichen 98 und 100 wird ein kombinierter Abgasrückführungsbetrieb durchgeführt, wobei dieser eine Kombination von Abgasrückführungen durch die Niederdruck-Abgasrückführung 80 und die Hochdruck-Abgasrückführung 74 darstellt. In dem Bereich 100 ist dabei eine Kühlung des durch die Niederdruck-Abgasrückführung 80 rückgeführten Abgases vonnöten.

In einem weiteren Bereich 102, also in einem oberen Lastenbereich der Verbrennungskraftmaschine 10, wird eine Abgasrückführung durch die Hochdruck-Abgasrückführung 74 durchgeführt.

Durch die in Fig. 2 gezeigte Betriebsstrategie ist eine Einhaltung von EU6-Emissionsgrenzwerten möglich.

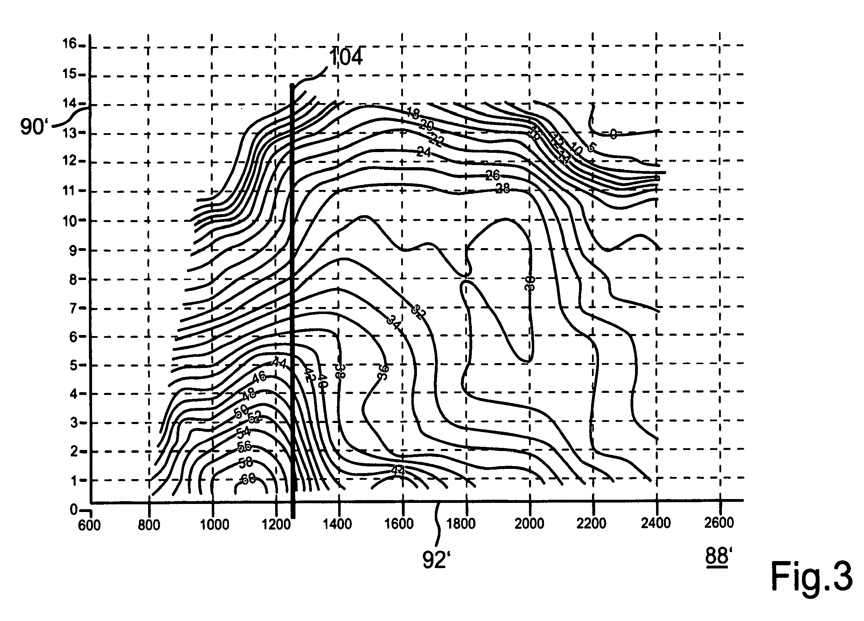

Die Fig. 3 zeigt eine Betriebsstrategie der Niederdruck-Abgasrückführung 80 gemäß Fig. 1 in einem Diagramm 88', wobei auf einer Ordinate 90' wiederum der effektive Mitteldruck der Verbrennungskraftmaschine 10 und auf einer Abszisse 92' die Drehzahl in den jeweiligen, in Zusammenhang mit Fig. 2 erläuterten Maßeinheiten dargestellt sind. Die in dem Diagramm 88' dargestellten und mit Zahlen versehenen Isolinien bezeichnen eine Niederdruck-Abgasrückführ-Rate, wobei in einem Drehzahlbereich unterhalb einer Umschaltgrenze 104 eine Abgasrückführung durch die Niederdruck-Abgasrückführung 80 und oberhalb der Umschaltgrenze 104 eine Abgasrückführung durch einen kombinierten Abgasrückführungsbetrieb durchgeführt wird, wie er bereits im Zusammenhang mit dem Diagramm 88 der Fig. 2 erläutert wurde.

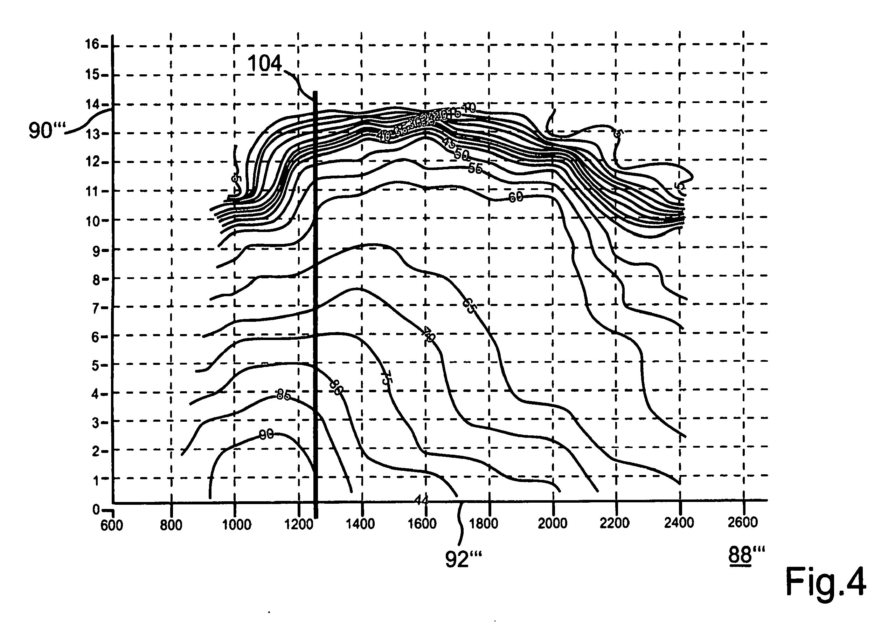

Auch die Fig. 4 zeigt in einem Diagramm 88''' eine Betriebsstrategie, und zwar die Betriebsstrategie der Abgasaufstauklappe 86 der Niederdruck-Abgasrückführung 80, wobei die in dem Diagramm 88''' dargestellten Isolinien ein Tastverhältnis der Abgasaufstauklappe 86 in der Maßeinheit Prozent angeben. Ein Tastverhältnis von 0 % entspricht dabei einer Offenstellung der Abgasaufstauklappe 86, während ein Tastverhältnis von 100 % einer geschlossenen Stellung der Abgasaufstauklappe 86 bedeutet. Eine Ordinate 90''' des Diagramms 88''' gibt wiederum Werte für den effektiven Mitteldruck der Verbrennungskraftmaschine 10 in Bar an, während auf eine Abszisse 93''' die Drehzahl der Verbrennungskraftmaschine 10 in der Maßeinheit 1 pro Minute aufgetragen ist. Für die in dem Diagramm 88''' eingetragene Umschaltgrenze gilt das in Zusammenhang mit den vorhergehenden Diagrammen 88' bzw. 88'' Gesagte analog.

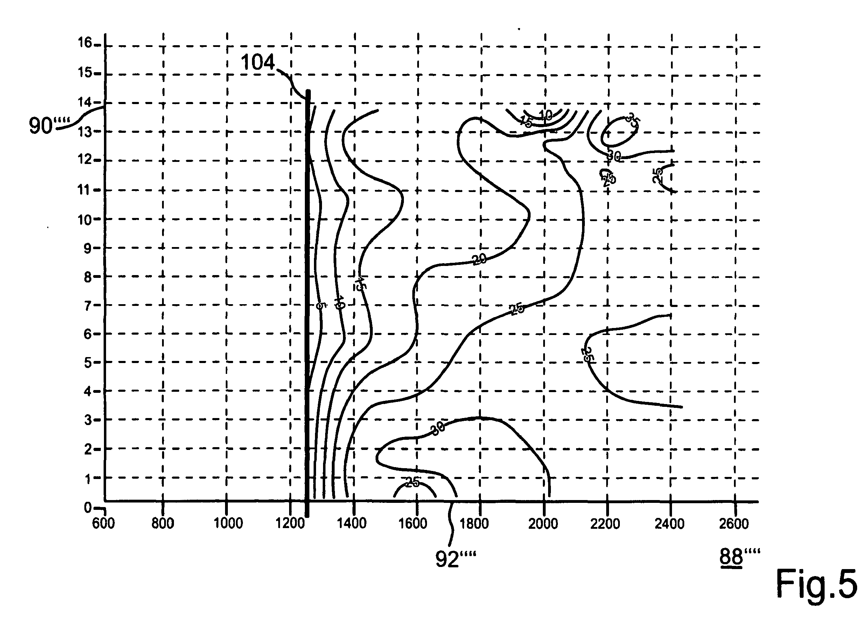

Die Fig. 5 zeigt in einem Diagramm 88'''' eine Betriebsstrategie des Hochdruck-AGR-Ventils 76 der Hochdruck-Abgasrückführung 74, wobei auf einer Ordinate 90'''' der effektive Mitteldruck der Verbrennungskraftmaschine 10 in der Maßeinheit Bar und auf einer Abszisse 92'''' die Drehzahl der Verbrennungskraftmaschine in der Maßeinheit 1 pro Minute aufgetragen ist. Die in dem Diagramm 88'''' eingetragenen Isolinien bezeichnen ein Tastverhältnis des Hochdruck-AGR-Ventils 76 in Prozent. In diesem Falle entspricht ein Tastverhältnis von 0 % einer geschlossenen Stellung des Hochdruck-AGR-Ventils 76, während ein Tastverhältnis von 100 % einer geschlossenen Stellung desselbigen entsprechen. Wie dem Diagramm 88'''' zu entnehmen und im Vergleich zum Diagramm 88'' zu erkennen ist, weist das Hochdruck-AGR-Ventil zwischen einer komplett geschlossenen und einer komplett geöffneten Stellung Zwischenstellungen auf. Im Gegensatz dazu ist das Niederdruck-AGR-Ventil 82 entweder komplett geschlossen oder komplett geöffnet. Es ist aber ebenso möglich, gegebenenfalls auch Zwischenstellungen des Niederdruck-AGR-Ventils 82 vorzusehen.

Aus der Fig. 5 wird weiterhin deutlich, dass das Hochdruck-AGR-Ventil 76 lediglich in dem Drehzahlbereich oberhalb der Umschaltgrenze 104 betätigt wird, da in diesem Bereich wie bereits erwähnt eine Kombination einer Abgasrückführung mittels der Hochdruck-Abgasrückführung 74 und mittels der Niederdruck-Abgasrückführung 80 durchgeführt wird, während unterhalb der Umschaltgrenze 104 lediglich eine Abgasrückführung durch die Niederdruck-Abgasrückführung 80 durchgeführt wird. In diesem unteren Drehzahlbereich ist somit eine Betätigung des Hochdruck-AGR-Ventils 76 nicht vonnöten bzw. nicht vorgesehen.

An dieser Stelle sei angemerkt, dass insbesondere die Werte der Isolinien der Diagramm 88', 88'', 88''' und 88'''' beispielhaft aufzufassen sind und in gewissen Grenzen durchaus schwanken können. Gleiches gilt für den effektiven Mitteldruck und die Drehzahl der Verbrennungskraftmaschine 10.

Bezugszeichenliste

| | |
|---|---|
| 10 | Verbrennungskraftmaschine |
| 12 | Zylinder |
| 14 | Zylinder |
| 16 | Zylinder |
| 18 | Zylinder |
| 20 | Hochdruckeinspritzsystem |
| 22 | Hochdruck-Abgasturbolader |
| 24 | Niederdruck-Abgasturbolader |
| 26 | Richtungspfeil |
| 28 | Richtungspfeil |
| 29 | Richtungspfeil |
| 30 | Richtungspfeil |
| 32 | Richtungspfeil |
| 34 | Ansaugseite |
| 36 | Verdichter |
| 37 | Richtungspfeil |
| 38 | Umströmungsklappe |
| 39 | Luftfilter |
| 40 | Umströmungseinrichtung |
| 42 | Verdichter |
| 44 | Ladeluftkühler |
| 46 | Umströmungseinrichtung |
| 48 | Umströmungsventil |
| 50 | Abgasseite |

52      Richtungspfeil
54      Richtungspfeil
56      Richtungspfeil
58      Richtungspfeil
60      Richtungspfeil
62      Turbine
64      Umströmungseinrichtung
66      Regelklappe
68      Turbine
70      Umströmungseinrichtung
72      Regelklappe

**Patentansprüche**

1.  Verfahren zum Betreiben einer Verbrennungskraftmaschine (10) mit zumindest einem Abgasturbolader (22, 24), welcher auf einer Abgasseite (50) der Verbrennungskraftmaschine (10) eine von einem Abgas der Verbrennungskraftmaschine (10) durchströmbare Turbine (62, 68) aufweist, bei welchem in Abhängigkeit eines Betriebszustandes der Verbrennungskraftmaschine (10) mittels einer Hochdruck-Abgasrückführung (74) und mittels einer Niederdruck-Abgasrückführung (80) Abgas entnommen und zu einer Ansaugseite (34) der Verbrennungskraftmaschine (10) rückgeführt wird, wobei in einem Drehzahlbereich der Verbrennungskraftmaschine (10) eine Umschaltgrenze (104) vorgesehen ist, bei welcher von einer Rückführung des Abgases mittels der Niederdruck-Abgasrückführung (80) auf eine Rückführung des Abgases mittels der Hochdruck-Abgasrückführung (74) und mittels der Niederdruck-Abgasrückführung (80), umgeschaltet wird, **dadurch gekennzeichnet, dass** der zumindest eine Abgasturbolader (22) als Hochdruck-Abgasturbolader (22) ausgebildet ist, und dass ein stromab zu diesem seriell geschalteter Niederdruck-Abgasturbolader (24) vorgesehen ist, wobei die Umschaltgrenze (104) in einem Drehzahlbereich

$$1000\left[\frac{1}{\min}\right] \leq \frac{U}{\min} \leq 2000\left[\frac{1}{\min}\right]$$ der Verbrennungskraftmaschine (10) vorgesehen ist, bei welcher von einer Rückführung des Abgases mittels der Niederdruck-Abgasrückführung (80) auf eine Rückführung des Abgases mittels der Hochdruck-Abgasrückführung (74) und mittels der Niederdruck-Abgasrückführung (80) umgeschaltet wird, wobei
in einem Drehzahlbereich der Verbrennungskraftmaschine (10) unterhalb der Umschaltgrenze (104) das Abgas ausschließlich mittels der Niederdruck - Abgasrückführung (80) entnommen und rückgeführt wird, wobei in einem Drehzahlbereich der Verbrennungskraftmaschine (10) oberhalb der Umschaltgrenze (104) das Abgas mittels der Hochdruck-Abgasrückführung (74) und mittels der Niederdruck-Abgasrückführung (80) kombiniert entnommen und rückgeführt wird, wobei in einem oberen Drehzahlbereich und/oder Lastbereich der Verbrennungskraftmaschine (10) das Abgas ausschließlich mittels der Hochdruck-Abgasrückführung (74) entnommen und rückgeführt wird.

2.  Verfahren nach Anspruch 1, **dadurch gekennzeichnet, dass** die Umschaltgrenze (104) in einem Drehzahlbereich

$$1200\left[\frac{1}{\min}\right] \leq \frac{U}{\min} \leq 1600\left[\frac{1}{\min}\right]$$ vorgesehen ist, bei welcher von einer Rückführung des Abgases mittels der Niederdruck-Abgasrückführung (80) auf eine Rückführung des Abgases mittels der Hochdruck-Abgasrückführung (74) und mittels der Niederdruck-Abgasrückführung (80) umgeschaltet wird.

3.  Verfahren nach einem der vorhergehenden Ansprüche,

**dadurch gekennzeichnet, dass** die Umschaltgrenze (104) bei im Wesentlichen $1250\left[\frac{1}{\min}\right]$ vorgesehen ist, bei welcher von einer Rückführung des Abgases mittels der Niederdruck-Abgasrückführung (80) auf eine Rückführung des Abgases mittels der Hochdruck-Abgasrückführung (74) und mittels der Niederdruck-Abgasrückführung (80) umgeschaltet wird.

4.  Verfahren nach einem der vorhergehenden Ansprüche,
    **dadurch gekennzeichnet,**

ein Niederdruck-AGR-Ventil (82) der Niederdruck-Abgasrückführung (80) zwischen einer im Wesentlichen komplett geöffneten Offenstellung und einer im Wesentlichen komplett geschlossenen Schließstellung umgeschaltet wird.

**5.** Verfahren nach einem der vorhergehenden Ansprüche,
**dadurch gekennzeichnet, dass**
in einem Drehzahlbereich der Verbrennungskraftmaschine (10) oberhalb der Umschaltgrenze (104) das mittels der Niederdruck-Abgasrückführung (80) entnommene und rückgeführte Abgas mittels einer Kühleinrichtung (84), insbesondere einem AGR-Kühler (84), gekühlt wird.

**6.** Verfahren nach einem der vorhergehenden Ansprüche,
**dadurch gekennzeichnet, dass**
in einem Drehzahlbereich der Verbrennungskraftmaschine (10) unterhalb der Umschaltgrenze (104) eine Abgasrückführung mit einer Abgasrückführrate in einem Bereich von 0% bis 60% durchgeführt wird.

**7.** Verfahren nach einem der vorhergehenden Ansprüche,
**dadurch gekennzeichnet, dass**
in einem Drehzahlbereich der Verbrennungskraftmaschine (10) oberhalb der Umschaltgrenze (104) eine Abgasrückführung mit einer Abgasrückführrate in einem Bereich von 0% bis 60% durchgeführt wird.

**8.** Verbrennungskraftmaschine (10) mit zumindest einem Abgasturbolader (22, 24), welcher auf einer Abgasseite (50) der Verbrennungskraftmaschine (10) eine von einem Abgas der Verbrennungskraftmaschine (10) durchströmbare Turbine (62, 68) aufweist, wobei eine Hochdruck-Abgasrückführung (74) und eine Niederdruck-Abgasrückführung (80) vorgesehen sind, mittels welchen Abgas von der Abgasseite (50) zu einer Ansaugseite (34) der Verbrennungskraftmaschine (10) rückführbar ist, wobei der Verbrennungskraftmaschine eine Steuereinrichtung zugeordnet ist, mittels welcher in einem Drehzahlbereich der Verbrennungskraftmaschine (10) von einer Rückführung des Abgases mittels der Niederdruck-Abgasrückführung (80) auf eine Rückführung des Abgases mittels der Hochdruck-Abgasrückführung (74) und mittels der Niederdruck-Abgasrückführung (80) umschaltbar ist, **dadurch gekennzeichnet, dass** der zumindest eine Abgasturbolader (22) als Hochdruck-Abgasturbolader (22) ausgebildet ist, und dass ein stromab zu diesem seriell geschalteter Niederdruck-Abgasturbolader (24) vorgesehen ist, welche jeweils auf einer Abgasseite (50) der Verbrennungskraftmaschine (10) eine von einem Abgas der Verbrennungskraftmaschine (10) durchströmbare Turbine (62, 68) aufweisen, wobei stromab zumindest einer der beiden Turbinen (62, 68) der beiden Abgasturbolader (22, 24) die Niederdruck-Abgasrückführung (80) angeordnet ist, wobei die Hochdruck-Abgasrückführung (74) zwischen der Verbrennungskraftmaschine (10) und der Turbine (62) des Hochdruck-Abgasturboladers (22) angeordnet ist, wobei die Niederdruck-Abgasrückführung (80) stromab der Turbine (68) des Niederdruck-Abgasturboladers (24) angeordnet ist, wobei mittels der Steuereinrichtung in einem Drehzahlbereich $1000 \left[ \dfrac{1}{\min} \right] \leq \dfrac{U}{\min} \leq 2000 \left[ \dfrac{1}{\min} \right]$ der Verbrennungskraftmaschine (10) von einer Rückführung des Abgases mittels der Niederdruck-Abgasrückführung (80) auf eine Rückführung des Abgases mittels der Hochdruck-Abgasrückführung (74) und mittels der Niederdruck-Abgasrückführung (80) umschaltbar ist, wobei unterhalb des Drehzahlbereichs das Abgas ausschließlich mittels der Niederdruck-Abgasrückführung (80) entnommen und rückgeführt ist.

**9.** Verbrennungskraftmaschine nach Anspruch 8,
**dadurch gekennzeichnet, dass**

mittels der Steuereinrichtung in einem Drehzahlbereich $1200 \left[ \dfrac{1}{\min} \right] \leq \dfrac{U}{\min} \leq 1600 \left[ \dfrac{1}{\min} \right]$ der Verbrennungskraftmaschine (10) von einer Rückführung des Abgases mittels der Niederdruck-Abgasrückführung (80) auf eine Rückführung des Abgases mittels der Hochdruck-Abgasrückführung (74) und mittels der Niederdruck-Abgasrückführung (80) umschaltbar ist.

**10.** Verbrennungskraftmaschine nach einem der Ansprüche 8 bis 9,
**dadurch gekennzeichnet, dass**
mittels der Steuereinrichtung bei einer Drehzahl der Verbrennungskraftmaschine (10) von im Wesentlichen

$$1250 \left[ \frac{1}{\text{min}} \right]$$ von einer Rückführung des Abgases mittels der Niederdruck-Abgasrückführung (80) auf eine Rückführung des Abgases mittels der Hochdruck-Abgasrückführung (74) und mittels der Niederdruck-Abgasrückführung (80) umschaltbar ist.

11. Verbrennungskraftmaschine (10) nach Anspruch 8,
**dadurch gekennzeichnet, dass**
die Hochdruck-Abgasrückführung (74) eine Kühleinrichtung (78), insbesondere einen Abgasrückführkühler (78), aufweist.

12. Verbrennungskraftmaschine (10) nach Anspruch 11,
**dadurch gekennzeichnet, dass**
die Kühleinrichtung (78) eine Umströmungseinrichtung (46) umfasst, mittels welcher die Kühleinrichtung (78) umströmbar ist.

13. Verbrennungskraftmaschine (10) nach einem der Ansprüche 8 bis 12,
**dadurch gekennzeichnet, dass**
die Niederdruck-Abgasrückführung (80) eine Kühleinrichtung (84), insbesondere einen Abgasrückführkühler (84), aufweist.

14. Verbrennungskraftmaschine (10) nach einem der Ansprüche 8 bis 13,
**dadurch gekennzeichnet, dass**
stromab der Turbine (68) des Niederdruck-Abgasturboladers (24) eine Abgasreinigungseinrichtung (73), angeordnet ist.

15. Verbrennungskraftmaschine (10) nach Anspruch 14,
**dadurch gekennzeichnet, dass**
die Abgasreinigungseinrichtung (73) einen Partikelfilter (73) umfasst.

16. Verbrennungskraftmaschine (10) nach einem der Ansprüche 14 oder 15, **dadurch gekennzeichnet, dass**
die Abgasreinigungseinrichtung (73) einen Oxidationskatalysator umfasst.

17. Verbrennungskraftmaschine nach einem der Ansprüche 14 bis 16, **dadurch gekennzeichnet, dass**
die Niederdruck-Abgasrückführung (80) stromab der Abgasreinigungseinrichtung (73), insbesondere stromab eines Partikelfilters (73) der Abgasreinigungseinrichtung (73), angeordnet ist.

18. Verbrennungskraftmaschine (10) nach einem der Ansprüche 8 bis 17,
**dadurch gekennzeichnet, dass**
stromab der Turbine (68) des Niederdruck-Abgasturboladers (24) eine Aufstaueinrichtung (86), insbesondere eine Aufstauklappe (86), angeordnet ist.

19. Verbrennungskraftmaschine (10) nach einem der Ansprüche 8 bis 18,
**dadurch gekennzeichnet, dass**
auf der Ansaugseite (34) stromab zumindest eines Verdichters (36, 42) der Abgasturbolader (22, 24) zumindest eine Kühleinrichtung (44), insbesondere ein Ladeluftkühler (44), angeordnet ist.

20. Verbrennungskraftmaschine (10) nach einem der Ansprüche 8 bis 19,
**dadurch gekennzeichnet, dass**
mittels der Hochdruck-Abgasrückführung (74) das Abgas unmittelbar zu stromauf der Verbrennungskraftmaschine (10) zur Ansaugseite (34) rückführbar ist.

21. Verbrennungskraftmaschine (10) nach einem der Ansprüche 8 bis 20,
**dadurch gekennzeichnet, dass**
mittels der Niederdruck-Abgasrückführung (80) das Abgas unmittelbar zu stromauf eines Verdichters (36) des Niederdruck-Abgasturboladers (24) zur Ansaugseite (34) rückführbar ist.

**Claims**

1. Method for operating an internal combustion engine (10) comprising at least one turbocharger (22, 24) which is provided on an exhaust gas side (50) of the internal combustion engine (10) with a turbine (62, 68) through which an exhaust gas of the internal combustion engine (10) can flow, wherein, as a function of an operating state of the internal combustion engine (10), exhaust gas is extracted by means of a high-pressure exhaust gas recirculation system (74) and by means of a low-pressure exhaust gas recirculation system (80) and recirculated to an intake side (34) of the internal combustion engine (10), wherein in a speed range of the internal combustion engine (10) there is provided a change-over limit (104) at which there is a change-over from an exhaust gas recirculation by means of the low-pressure exhaust gas recirculation system (80) to an exhaust gas recirculation by means of the high-pressure exhaust gas recirculation system (74) and by means of the low-pressure exhaust gas recirculation system (80), **characterised in that** the at least one turbocharger (22) is designed as a high-pressure turbocharger (22), and **in that** a low-pressure turbocharger (24) connected in series therewith is provided downstream, the change-over limit (104) being provided in a speed range of $1000\left[\dfrac{1}{\min}\right] \leq \dfrac{U}{\min} \leq 2000\left[\dfrac{1}{\min}\right]$ of the internal combustion engine (10),
at which there is a change-over from an exhaust gas recirculation by means of the low-pressure exhaust gas recirculation system (80) to an exhaust gas recirculation by means of the high-pressure exhaust gas recirculation system (74) and by means of the low-pressure exhaust gas recirculation system (80), wherein
in a speed range of the internal combustion engine (10) below the change-over limit (104) the exhaust gas is exclusively extracted and recirculated by means of the low-pressure exhaust gas recirculation system (80), wherein
in a speed range of the internal combustion engine (10) above the change-over limit (104) the exhaust gas is extracted and recirculated in combination by means of the high-pressure exhaust gas recirculation system (74) and by means of the low-pressure exhaust gas recirculation system (80), the exhaust gas being exclusively extracted and recirculated by means of the high-pressure exhaust gas recirculation system (74) in an upper speed and/or load range of the internal combustion engine (10).

2. Method according to claim 1, **characterised in that** the change-over limit (10) is provided in a speed range of

$$1200\left[\dfrac{1}{\min}\right] \leq \dfrac{U}{\min} \leq 1600\left[\dfrac{1}{\min}\right]$$

of the internal combustion engine (10),
at which there is a change-over from an exhaust gas recirculation by means of the low-pressure exhaust gas recirculation system (80) to an exhaust gas recirculation by means of the high-pressure exhaust gas recirculation system (74) and by means of the low-pressure exhaust gas recirculation system (80).

3. Method according to any of the preceding claims,

**characterised in that** the change-over limit (104) is provided at substantially $1250\left[\dfrac{1}{\min}\right]$

at which speed there is a change-over from an exhaust gas recirculation by means of the low-pressure exhaust gas recirculation system (80) to an exhaust gas recirculation by means of the high-pressure exhaust gas recirculation system (74) and by means of the low-pressure exhaust gas recirculation system (80).

4. Method according to any of the preceding claims,
**characterised in that**
a low-pressure EGR valve (82) of the low-pressure exhaust gas recirculation system (80) is switched between an open position which is substantially opened completely and a closed position which is substantially closed completely.

5. Method according to any of the preceding claims,
**characterised in that**
in a speed range of the internal combustion engine (10) which is above the change-over limit (104) the exhaust gas extracted and recirculated by means of the low-pressure exhaust gas recirculation system (80) is cooled by means of a cooling device (84), in particular by an EGR cooler (84).

**6.** Method according to any of the preceding claims, **characterised in that** in a speed range of the internal combustion engine (10) which is below the change-over limit (104) exhaust gas is recirculated at an exhaust gas recirculation rate in a range of 0% to 60%.

**7.** Method according to any of the preceding claims, **characterised in that** in a speed range of the internal combustion engine (10) which is above the change-over limit (104) exhaust gas is recirculated at an exhaust gas recirculation rate in a range of 0% to 60%.

**8.** Internal combustion engine (10) comprising at least one turbocharger (22, 24) which is provided on an exhaust gas side (50) of the internal combustion engine (10) with a turbine (62, 68) through which an exhaust gas of the internal combustion engine (10) can flow, wherein a high-pressure exhaust gas recirculation system (74) and a low-pressure exhaust gas recirculation system (80) are provided by means of which exhaust gas can be recirculated from the exhaust gas side (50) of the internal combustion engine (10) to an intake side (34) thereof, wherein a control unit by means of which a change-over from an exhaust gas recirculation by means of the low-pressure exhaust gas recirculation system (80) to an exhaust gas recirculation by means of the high-pressure exhaust gas recirculation system (74) and the low-pressure exhaust gas recirculation system (80) can be performed in a speed range of the internal combustion engine (10) is assigned to the internal combustion engine, **characterised in that** the at least one turbocharger (22) is designed as a high-pressure turbocharger (22), and **in that** a low-pressure turbocharger (24) connected in series therewith is provided downstream, each comprising on an exhaust gas side (50) of the internal combustion engine (10) a turbine (62, 68) through which an exhaust gas of the internal combustion engine (10) can flow, wherein the low-pressure exhaust gas recirculation system (80) is located downstream of at least one of the two turbines (62, 68) of the two turbochargers (22, 24), wherein the high-pressure exhaust gas recirculation system (74) is located between the internal combustion engine (10) and the turbine (62) of the high-pressure turbocharger (22), wherein the low-pressure exhaust gas recirculation system (80) is located downstream of the turbine (68) of the low-pressure turbocharger (24), wherein a change-over from an exhaust gas recirculation by means of the low-pressure exhaust gas recirculation system (80) to an exhaust gas recirculation by means of the high-pressure exhaust gas recirculation system (74) and the low-pressure exhaust gas recirculation system (80) can be performed by means of the control unit in a speed range of $1000 \left[ \dfrac{1}{\min} \right] \leq \dfrac{U}{\min} \leq 2000 \left[ \dfrac{1}{\min} \right]$ of the internal combustion engine (10), wherein the exhaust gas is exclusively extracted and recirculated by means of the low- pressure exhaust gas recirculation system (80) below this speed range.

**9.** Internal combustion engine according to claim 8, **characterised in that** a change-over from an exhaust gas recirculation by means of the low-pressure exhaust gas recirculation system (80) to an exhaust gas recirculation by means of the high-pressure exhaust gas recirculation system (74) and the low-pressure exhaust gas recirculation system (80) can be performed by means of the control unit in a speed range

of $1200 \left[ \dfrac{1}{\min} \right] \leq \dfrac{U}{\min} \leq 1600 \left[ \dfrac{1}{\min} \right]$ of the internal combustion engine (10).

**10.** Internal combustion engine according to claim 8 or 9, **characterised in that** a change-over from an exhaust gas recirculation by means of the low-pressure exhaust gas recirculation system (80) to an exhaust gas recirculation by means of the high-pressure exhaust gas recirculation system (74) and the low-pressure exhaust gas recirculation system (80) can be performed by means of the control unit at a speed of the internal combustion engine (10) of substantially $1250 \left[ \dfrac{1}{\min} \right]$

**11.** Internal combustion engine (10) according to claim 8,
**characterised in that**
the high-pressure exhaust gas recirculation system (74) comprises a cooling device (78), in particular an exhaust gas recirculation cooler (78).

**12.** Internal combustion engine (10) according to claim 11, **characterised in that**
the cooling device (78) comprises a bypass device (46) by means of which the cooling device (78) can be bypassed.

**13.** Internal combustion engine (10) according to any of claims 8 to 12, **characterised in that**
the low-pressure exhaust gas recirculation system (80) comprises a cooling device (84), in particular an exhaust gas recirculation cooler (84).

**14.** Internal combustion engine (10) according to any of claims 8 to 13, **characterised in that**
an exhaust emission control device (73) is provided downstream of the turbine (68) of the low-pressure turbocharger (24).

**15.** Internal combustion engine (10) according to claim 14, **characterised in that**
the exhaust emission control device (73) comprises a particulate filter (73).

**16.** Internal combustion engine (10) according to claim 14 or 15, **characterised in that**
the exhaust emission control device (73) comprises an oxidising catalyst.

**17.** Internal combustion engine (10) according to any of claims 14 to 16, **characterised in that**
the low-pressure exhaust gas recirculation system (80) is located downstream of the exhaust emission control device (73), in particular downstream of a particulate filter (73) of the exhaust emission control device (73).

**18.** Internal combustion engine (10) according to any of claims 8 to 17, **characterised in that**
a damming device (86), in particular a damming flap (86), is provided downstream of the turbine (68) of the low-pressure turbocharger (24).

**19.** Internal combustion engine (10) according to any of claims 8 to 18, **characterised in that**
at least one cooling device (44), in particular an intercooler (44), is provided on the intake side (34) downstream of at least one compressor (36, 42) of the turbochargers (22, 24).

**20.** Internal combustion engine (10) according to any of claims 8 to 19, **characterised in that**
the exhaust gas can be recirculated directly to the intake side (34) upstream of the internal combustion engine (10) by means of the high-pressure exhaust gas recirculation system (74).

**21.** Internal combustion engine (10) according to any of claims 8 to 20, **characterised in that**
the exhaust gas can be recirculated directly to the intake side (34) upstream of a compressor (36) of the low-pressure turbocharger (24) by means of the low-pressure exhaust gas recirculation system (80).

**Revendications**

**1.** Procédé pour faire fonctionner un moteur à combustion interne (10) avec au moins un turbocompresseur à gaz d'échappement (22, 24) lequel présente sur un côté d'échappement (50) du moteur à combustion interne (10) une turbine (62, 68) pouvant être parcourue par un gaz d'échappement du moteur à combustion interne (10), selon lequel en fonction d'un état de fonctionnement du moteur à combustion interne (10) du gaz d'échappement est prélevé au moyen d'un recyclage à haute pression des gaz d'échappement haute pression (74) et au moyen d'un recyclage des gaz d'échappement basse pression (80) et recyclé vers un côté d'admission (34) du moteur à combustion interne (10), une limite de basculement (104) étant prévue dans une plage de vitesse du moteur à combustion interne (10), selon laquelle on bascule d'un recyclage du gaz d'échappement au moyen du recyclage des gaz d'échappement basse pression (80) à un recyclage du gaz d'échappement au moyen du recyclage des gaz d'échappement haute pression (74) et au moyen d'un recyclage des gaz d'échappement basse pression (80), **caractérisé en ce que** l'au moins un turbocompresseur (22) est conçu comme un turbocompresseur (22) à gaz d'échappement haute pression et **en ce qu'**il est prévu un turbocompresseur (24) à gaz d'échappement basse pression raccordé en série en amont de celui-ci, la limite de basculement (104) étant prévue dans une plage de vitesse de

$$1000 \left[ \frac{1}{\text{min}} \right] \leq \frac{U}{\text{min}} \leq 2000 \left[ \frac{1}{\text{min}} \right]$$ du moteur à combustion interne (10), dans lequel on bascule d'un recyclage de gaz d'échappement au moyen d'un recyclage des gaz d'échappement basse pression (80) à un recyclage de gaz d'échappement au moyen du recyclage des gaz d'échappement haute pression (74) et au moyen du recyclage des gaz d'échappement basse pression (80), dans une plage de vitesse du moteur à combustion interne (10), en dessous de la limite de basculement (104) le gaz d'échappement étant exclusivement prélevé et recyclé au moyen du recyclage des gaz d'échappement basse pression (80), dans une plage de vitesse du moteur à combustion interne (10), au dessus de la limite de basculement (104) le gaz d'échappement étant de manière combinée prélevé et recyclé au moyen du recyclage des gaz d'échappement haute pression (74) et au moyen du recyclage des gaz d'échappement basse pression (80), dans une plage de vitesse supérieure et / ou dans une plage de charge du moteur à combustion interne (10) le gaz d'échappement étant exclusivement prélevé et recyclé au moyen du recyclage des gaz d'échappement haute pression (74).

2. Procédé selon la revendication 1, **caractérisé en ce que** la limite de basculement (104) est prévue dans une plage de vitesse de $$1200 \left[ \frac{1}{\text{min}} \right] \leq \frac{U}{\text{min}} \leq 1600 \left[ \frac{1}{\text{min}} \right]$$ à laquelle on bascule d'un recyclage de gaz d'échappement au moyen d'un recyclage de gaz d'échappement basse pression (80) à un recyclage de gaz d'échappement au moyen du recyclage des gaz d'échappement haute pression (74) et au moyen du recyclage des gaz d'échappement basse pression (80).

3. Procédé selon l'une quelconque des revendications précédentes, **caractérisé en ce que** la limite de basculement (104) est prévue essentiellement à $$1250 \left[ \frac{1}{\text{min}} \right]$$, à laquelle on bascule d'un recyclage de gaz d'échappement au moyen d'un recyclage des gaz d'échappement basse pression (80) à un recyclage de gaz d'échappement au moyen du recyclage des gaz d'échappement haute pression (74) et au moyen du recyclage des gaz d'échappement basse pression (80).

4. Procédé selon l'une quelconque des revendications précédentes, **caractérisé en ce qu'**une soupape RGE basse pression (82) du recyclage de gaz d'échappement basse pression (80) est basculée d'une position d'ouverture essentiellement complète à une position de fermeture essentiellement complète.

5. Procédé selon l'une quelconque des revendications précédentes, **caractérisé en ce que** dans une plage de vitesse du moteur à combustion interne (10) au dessus de la limite de basculement (104) le gaz d'échappement prélevé et recyclé au moyen d'un recyclage des gaz d'échappement basse pression (80) est refroidi au moyen d'un dispositif de refroidissement (84), en particulier un refroidisseur RGE (84).

6. Procédé selon l'une quelconque des revendications précédentes, **caractérisé en ce que** dans une plage de vitesse du moteur à combustion interne (10) en dessous de la limite de basculement (104) un recyclage de gaz d'échappement est effectué à un taux de recirculation de gaz d'échappement dans une plage de 0%à60%.

7. Procédé selon l'une quelconque des revendications précédentes, **caractérisé en ce que** dans une plage de vitesse du moteur à combustion interne (10) au dessus de la limite de basculement (104) un recyclage de gaz d'échappement est effectué à un taux de recirculation de gaz d'échappement dans une plage de 0 % à 60 %.

8. Moteur à combustion interne (10) comprenant au moins un turbocompresseur (22, 24) à gaz d'échappement (22, 24) lequel présente sur un côté d'échappement (50) du moteur à combustion interne (10) une turbine (62, 68) pouvant être parcourue par un gaz d'échappement du moteur à combustion interne (10), il est prévu un recyclage des gaz d'échappement à haute pression (74) et un recyclage des gaz d'échappement basse pression (80) au moyen desquels le gaz d'échappement peut être recyclé du côté gaz d'échappement (50) vers un côté d'admission (34) du moteur à combustion interne (10), le moteur à combustion interne étant associé à un dispositif de commande, au moyen de laquelle il est possible de basculer dans une plage de vitesse du moteur à combustion interne (10) d'un recyclage du gaz d'échappement au moyen du recyclage des gaz d'échappement basse pression (80) à un recyclage de gaz d'échappement au moyen du recyclage des gaz d'échappement haute pression (74) et au moyen du recyclage des gaz d'échappement basse pression (80), **caractérisé en ce que** l'au moins un turbocompresseur à gaz d'échappement (22) est conçu comme un turbocompresseur (22) à gaz d'échappement haute pression et **en ce qu'**il est prévu un turbocompresseur (24) à gaz d'échappement basse pression raccordé en série en amont de celui-ci, qui chacun sur un côté d'échappement (50) du moteur à combustion interne (10) présente une turbine (62, 68) pouvant être parcourue par un gaz d'échappement du moteur à combustion interne (10), le recyclage des gaz d'échappement basse pression (80) étant disposé en aval d'au moins l'une des deux turbines (62, 68) des deux turbocompresseurs à gaz d'échappement (22, 24), le recyclage des gaz d'échappement haute pression (74) étant disposé entre le moteur à combustion interne (10) et la turbine (62) du turbocompresseur à gaz d'échappement haute pression (22), le recyclage des gaz d'échappement basse pression (80) étant disposé en aval de la turbine (68) du turbocompresseur à gaz d'échappement basse pression (24), au moyen du dispositif de commande il est possible de basculer dans une plage de vitesse $1000\left[\dfrac{1}{\min}\right] \le \dfrac{U}{\min} \le 2000\left[\dfrac{1}{\min}\right]$ du moteur à combustion interne (10) d'un recyclage du gaz d'échappement au moyen du recyclage des gaz d'échappement basse pression (80) à un recyclage de gaz d'échappement au moyen du recyclage des gaz d'échappement haute pression (74) et au moyen du recyclage des gaz d'échappement basse pression (80), le gaz d'échappement étant exclusivement prélevé et recyclé au moyen du recyclage des gaz d'échappement basse pression (80) en dessous de la plage de vitesse.

9.  Moteur à combustion interne selon la revendication 8, **caractérisé en ce qu'**au moyen du dispositif de commande dans une plage de vitesse de $1200\left[\dfrac{1}{\min}\right] \le \dfrac{U}{\min} \le 1600\left[\dfrac{1}{\min}\right]$ du moteur à combustion interne (10) il est possible de basculer d'un recyclage du gaz d'échappement au moyen du recyclage des gaz d'échappement basse pression (80) à un recyclage de gaz d'échappement au moyen du recyclage des gaz d'échappement haute pression (74) et au moyen du recyclage des gaz d'échappement basse pression (80).

10. Moteur à combustion interne selon l'une quelconque des revendications 8 à 9, **caractérisé en ce qu'**au moyen du dispositif de commande dans une plage de vitesse essentiellement de $1250\left[\dfrac{1}{\min}\right]$ du moteur à combustion interne (10), il est possible de basculer d'un recyclage du gaz d'échappement au moyen du recyclage des gaz d'échappement basse pression (80) à un recyclage de gaz d'échappement au moyen du recyclage des gaz d'échappement haute pression (74) et au moyen du recyclage des gaz d'échappement basse pression (80).

11. Moteur à combustion interne (10) selon la revendication 8, **caractérisé en ce que** le recyclage du gaz d'échappement basse pression (74) présente un dispositif de refroidissement (78), en particulier un refroidisseur de recyclage des gaz d'échappement (78).

12. Moteur à combustion interne (10) selon la revendication 11, **caractérisé en ce que** le dispositif de refroidissement (78) comprend un dispositif de contournement en écoulement (46) au moyen duquel le dispositif de refroidissement (78) peut être contourné en écoulement.

13. Moteur à combustion interne (10) selon l'une quelconque des revendications 8 à 12, **caractérisé en ce que** le recyclage du gaz d'échappement basse pression (80) présente un dispositif de refroidissement (84), en particulier un refroidisseur de recyclage des gaz d'échappement (84).

14. Moteur à combustion interne (10) selon l'une quelconque des revendications 8 à 13, **caractérisé en ce qu'**un dispositif d'épuration de gaz d'échappement (73) est disposé en aval de la turbine (68) du turbocompresseur à gaz d'échappement basse pression (24).

15. Moteur à combustion interne (10) selon la revendication 14, **caractérisé en ce que** le dispositif d'épuration de gaz d'échappement (73) comprend un filtre à particules.

16. Moteur à combustion interne (10) selon l'une quelconque des revendications 14 à 15, **caractérisé en ce que** le dispositif d'épuration de gaz d'échappement (73) comprend un catalyseur à oxydation.

17. Moteur à combustion interne (10) selon l'une quelconque des revendications 14 à 16, **caractérisé en ce que** le recyclage du gaz d'échappement basse pression (80) est disposé en aval du dispositif d'épuration de gaz d'échappement (73), en particulier en aval d'un filtre à particules (73) du dispositif d'épuration de gaz d'échappement (73).

18. Moteur à combustion interne (10) selon l'une quelconque des revendications 8 à 17, **caractérisé en ce qu'**un dispositif de retenue (86) est disposé en aval de la turbine (68) du turbocompresseur à gaz d'échappement basse pression (24), en particulier un clapet de retenue (86).

19. Moteur à combustion interne (10) selon l'une quelconque des revendications 8 à 18, **caractérisé en ce qu'**au moins un dispositif de refroidissement (44), en particulier refroidisseur d'air de suralimentation (44), est disposé sur le côté d'admission (34) en aval d'au moins un compresseur (36, 42) du turbocompresseur à gaz d'échappement (22, 24).

20. Moteur à combustion interne (10) selon l'une quelconque des revendications 8 à 19, **caractérisé en ce qu'**au moyen du recyclage du gaz d'échappement haute pression (74) le gaz d'échappement peut être recyclé directement en amont du moteur à combustion interne (10), côté d'admission (34).

21. Moteur à combustion interne (10) selon l'une quelconque des revendications 8 à 20, **caractérisé en ce qu'**au moyen du recyclage du gaz d'échappement basse pression (80) le gaz d'échappement peut être recyclé directement en amont du compresseur (36) du turbocompresseur à gaz d'échappement basse pression (24), côté d'admission (34).

Fig.1

Fig.2

EP 2 462 333 B1

Fig.3

Fig.4

Fig.5

**IN DER BESCHREIBUNG AUFGEFÜHRTE DOKUMENTE**

**In der Beschreibung aufgeführte Patentdokumente**

- WO 2007107865 A2
- JP 2004150319 A
- DE 102005046507 A1
- US 7013879 B2
- WO 2008058596 A1